Europäisches Patentamt

European Patent Office

Office européen des brevets

(11) Veröffentlichungsnummer: **0 420 367 A1**

## (12) EUROPÄISCHE PATENTANMELDUNG

(21) Anmeldenummer: **90250244.2**

(22) Anmeldetag: **24.09.90**

(51) Int. Cl.⁵: **B09B 3/00**, B09B 5/00, H01J 9/50, B07B 4/08

(30) Priorität: **28.09.89 DE 3932772**

(43) Veröffentlichungstag der Anmeldung:
**03.04.91 Patentblatt 91/14**

(84) Benannte Vertragsstaaten:
**CH DE FR IT LI**

(71) Anmelder: **ELEKTRO-OFENBAU MATTHIAS MARCUS GmbH**
**Wilhelm-von-Siemens-Strasse 15-23**
**W-1000 Berlin 48(DE)**

(72) Erfinder: **Kühl, Bernhard, Dr.**
**Schweinfurther Strasse 94**
**W-1000 Berlin 33(DE)**

(74) Vertreter: **Pfenning, Meinig & Partner**
**Kurfürstendamm 170**
**W-1000 Berlin 15(DE)**

(54) **Verfahren und Vorrichtung zur Entsorgung von quecksilberhaltigen Lampen.**

(57) Es wird ein Verfahren zur Entsorgung von im allgemeinen mit Leuchtstoff versehenen quecksilberhaltigen Lampen vorgeschlagen, bei dem die Lampen in einer Zerkleinerungsvorrichtung zerkleinert und in einer Siebmaschine in mindestens drei Fraktionen mit Bestandteilen unterschiedlicher Größe aufgeteilt werden. Die Fraktion mit den kleinsten Bestandteilen umfaßt den quecksilberhaltigen Leuchtstoff, der beispielsweise einem Ofen zugeführt wird, in dem er aufgeheizt wird und der entstehende Quecksilberdampf unter Zuführung von Gas einem Kondensator zugeführt wird, in dem das Quecksilber kondensiert wird.

EP 0 420 367 A1

Xerox Copy Centre

# VERFAHREN UND VORRICHTUNG ZUR ENTSORGUNG VON QUECKSILBERHALTIGEN LAMPEN

Die Erfindung betrifft ein Verfahren zur Entsorgung von quecksilberhaltigen Lampen nach der Gattung des Hauptanspruchs und eine Vorrichtung zur Durchführung dieses Verfahrens.

Aus der DE-PS 36 09 517 ist ein Verfahren und eine Vorrichtung zum Entfernen von Quecksilber aus festen quecksilberhaltigen Materialien, beispielsweise Leuchtstofflampen bekannt, bei denen die Leuchtstofflampen in einen Ofen eingeführt werden, wobei sie zerkleinert werden. In dem Ofen wird das zerkleinierte Material erhitzt, wodurch sich Quecksilberdampf bildet. Der Ofen wird mit einem Gas durchspült, das Gas mit dem Quecksilberdampf wird anschließend in einer Kondensatoreinrichtung kondensiert und nach der Kondensation des Quecksilbers in einem geschlossenen Kreislauf in den Ofenraum zurückgeführt.

Obwohl diese Anlage befriedigend arbeitet, hat sich doch den Nachteil, daß eine große Menge von Material ausgeheizt werden muß, um das Quecksilber, das im Leuchtstoff von Lampen vorhanden ist, zu entfernen. Daher ist die Durchsatzleistung relativ gering, so daß die Kosten für die Entsorgung noch relativ hoch sind.

Aus der EP 0 157 249 ist weiterhin ein Verfahren und eine Vorrichtung zur Aufarbeitung von stabförmigen Leuchtstofflampen bekannt, bei denen die Enden der nicht funktionsfähigen stabförmigen Leuchtstofflampen abgetrennt werden. Die Leuchtstoffbeschichtung und das Quecksilber werden anschließend mittels Druckluft aus dem Entladungsgefäß entfernt, das Leuchtstoffgemisch durch Gewebefilter und das Quecksilber durch Aktivkohle abgetrennt und das Glas des Entladungsgefäßes zerkleinert. Dieses Verfahren ist sehr aufwendig und damit auch kostenintensiv und es können nur stabförmige Leuchtstofflampen verarbeitet werden. Ausgehend von diesem bekannten Stand der Technik liegt der Erfindung die Aufgabe zugrunde, ein Verfahren und eine Vorrichtung zur Entsorgung von quecksilberhaltigen Lampen zu schaffen, bei dem alle Arten von quecksilberhaltigen Lampen mit großer Durchsatzleistung verarbeitet werden, wobei die Kosten gering sein sollen.

Diese Aufgabe wird erfindungsgemäß durch die kennzeichnenden Merkmale des Hauptanspruchs in Verbindung mit den Merkmalen des Oberbegriffs gelöst.

Dadurch, daß die Lampen erst zerkleinert werden und durch Sieben in mindestens drei Fraktionen aufgeteilt werden, deren Bestandteile unterschiedliche Größen aufweisen, kann die Durchsatzleistung stark erhöht werden und es wird eine gute Trennung der einzelnen Bestandteile erzielt. Da der Leuchtstoff und das Quecksilber in der Fraktion mit den kleinsten Bestandteilen enthalten ist, muß jeweils nur eine kleine Menge entsorgt oder längerfristig gelagert werden. Weiterhin können alle Arten von quecksilberhaltigen Lampen, also auch U-Form-, Ring- und Hochdrucklampen verarbeitet werden. Die Verarbeitung der Lampen kann mit geringen Betriebskosten durchgeführt werden, wobei eine einfache Bedienung und Wartung der Vorrichtung möglich ist.

Durch die in den Unteransprüchen angegebenen Maßnahmen sind vorteilhafte Weiterbildungen und Verbesserungen möglich. Besonders vorteilhaft ist, daß nur eine kleine Menge, die Leuchtstoff und Quecksilber enthält, ausgeheizt wird.

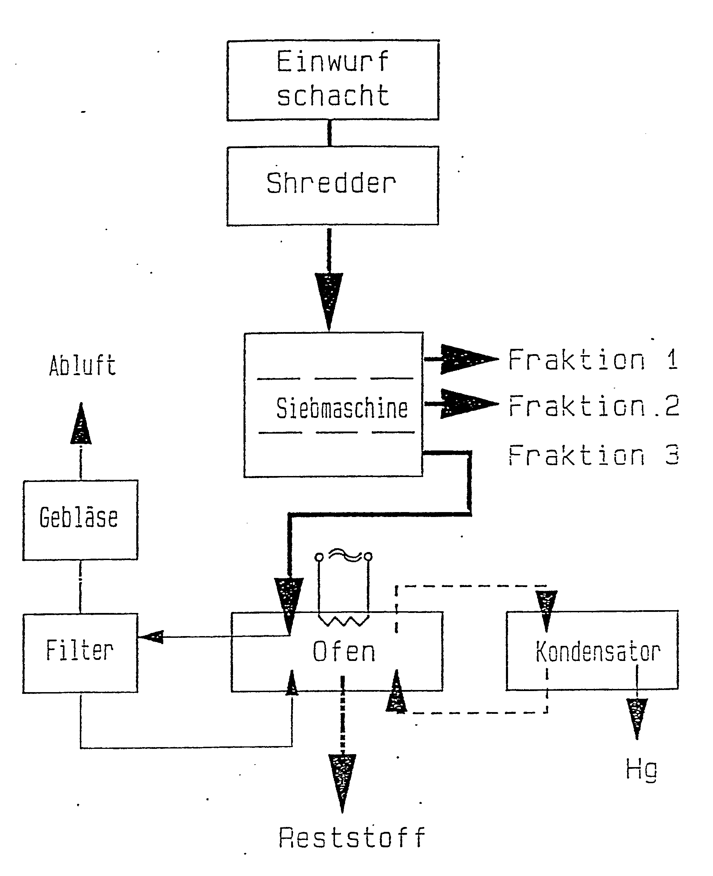

Ein Ausführungsbeispiel der Erfindung ist in der Zeichnung dargestellt und wird in der nachfolgenden Beschreibung näher erläutert.

Die einzige Figur zeigt schematisch den Ablauf des erfindungsgemäßen Verfahrens.

Die zu entsorgenden Lampen werden über einen Einwurfschacht 1 in eine Zerkleinerungsvorrichtung, die als Shredder, Hammermühle oder Brecher ausgebildet ist, eingeführt, in der sie zerstört bzw. zerkleinert werden. Die Zerkleinerungsvorrichtung ist mit einer Klappe nach außen verschlossen, die nach dem Einwurf sich automatisch schließt, so daß der Austritt von zerkleinerten Lampenteilen verhindert wird. Die Lampenteile werden aus der Zerkleinerungsvorrichtung in eine Separationsvorrichtung überführt, wobei der Transport vorzugsweise mit Unterdruck geschieht. Die Separationsvorrichtung ist in dem bevorzugten Ausführungsbeispiel als Siebmaschine ausgebildet, wobei allerdings auch ein Windsichter oder eine Zentrifuge verwendbar ist. Da drei Fraktionen gebildet werden sollen, weist die Siebmaschine zwei Siebe mit einer Maschenweite von vorzugsweise 6 mm und 0,3 mm auf. Die Fraktion mit den größten Bestandteilen, die zwischen 3 mm und 8 mm liegen, weist hauptsächlich Metall und ein wenig Glas auf, die zweite Fraktion besteht ca. zu 3/4 aus Glas und die dritte Fraktion mit den kleinsten Bestandteilen mit einer Größe von 0,4 mm und weniger aus Leuchtstoffpulver und Quecksilber und noch kleinsten Glasresten. Die Metallteile werden in wesentlichen von den Lampenenden gebildet. Während der Förderung von der Zerkleinerungsvorrichtung zur Siebmaschine im Luftstrom und durch die Vibration in der Siebmaschine wird der Leuchtstoff vom Glas getrennt, so daß in der dritten Fraktion im wesentlichen Leuchtstoffpulver enthalten ist.

Um noch eine bessere Trennung der ersten Fraktion zwischen Metall und Glas vornehmen zu können kann der Siebmaschine eine weitere Trennvorrichtung, beispielsweise ein Metallabscheider, der als Magnetabscheider und/oder als elektronischer Allmetallabscheider ausgebildet sein kann, nachgeschaltet werden, die das Glass von dem Metall oder umgekehrt abscheidet. Vorzugsweise wird aus der im wesentlichen Glas enthaltenden Fraktion das Metall ausgeschieden. Die Fraktionen 1 und 2 werden in Transportbehälter abgefüllt und werden entweder verwertet oder als Hausmüll entsorgt. Die Glasfraktion (Fraktion 2) wird bei einem bevorzugten Ausführungsbeispiel auf der Siebmaschine oder aus dem Metall abscheider mit einer Vibrator, beispielsweise einem Wendelförderer, unter Luftabschlub in ein Transportgefäß gebracht. Im Falle, daß an den Glasbestandteilen noch Quecksilber anhaftet, kann zur weiteren Reduzierung der Ouecksilbermenge der Vibrator mit Heizelementen versehen sein, der die Bestandteile während ihres Transportweges aufheizt. Die Aufheizung erfolgs auf 200° - 500° über einen Zeitraum von 1 bis 3 min.

Die dritte Fraktion mit dem Leuchtstoff und den kleinsten Glasbestandteilen werden vorzugsweise mit unterdruck in einen Ofen transportiert, in dem die Bestandteile der Fraktion bei ca. 500° C für einen Zeitraum von 16 Stunden aufgeheizt werden, wobei gleichzeitig Gas zugeführt werden kann. Die mit Quecksilber angereicherte Luft wird in einen Kondensator überführt, in dem das Quecksilber kondensiert und entfernt wird und die verbleibende Luft wieder in den Ofen zurückgeführt wird. Die Abluft des Ofens wird über eine Absauganlage mit Tuch- und Aktivkohlefilter und Reststoffbehälter geführt. Der ausgeheizte Reststoff, der im wesentlichen aus Leuchtstoff besteht, weist weniger als 0,5 ppm an Quecksilber auf. Der Leuchtstoff, der vorzugsweise mit Unterdruck in einen Transportbehälter überführt wird, kann aufgearbeitet werden, er kann aber auch, wenn eine Aufarbeitung nicht wirtschaftlich ist, auf einer Sondermülldeponie abgelagert werden. Da die anfallende Menge der im wesentlichen Leuchtstoff enthaltenden dritten Fraktion klein ist, kann gegebenenfalls ihre Ablagerung in der Sondermülldeponie auch ohne verheriges Aufheizen in dem Ofen erfolgen.

**Ansprüche**

1. Verfahren zur Entsorgung von quecksilberhaltigen Lampen, bei dem die Lampen zerkleinert werden,
**dadurch gekennzeichnet,**
daß die zerkleinerten Lampen mittels einer Separationsvorrichtung in mindestens drei Fraktionen aufgeteilt werden, deren Bestandteile unterschiedliche Größe haben.

2. Verfahren nach Anspruch 1, dadurch gekennzeichnet, daß die drei Fraktionen in einer Siebmaschine durch Sieben getrennt werden.

3. Verfahren nach Anspruch 1 oder 2, dadurch gekennzeichnet, daß die Lampenteile nach dem Zerkleinern mit Unterdruck zu der Separationsvorrichtung transportiert werden.

4. Verfahren nach einem der Ansprüche 1 bis 3, dadurch gekennzeichnet, daß die das Quecksilber und gegebenenfals Leuchtstoff enthaltende Fraktion mit den Bestandteilen kleinster Größe dem Ofen zugeführt und dort ausgeheizt wird.

5. Verfahren nach einem der Ansprüche 1 bis 4, dadurch gekennzeichnet, daß zumindest die Fraktion mit den Bestandteilen mittlerer Größe, die hauptsächlich Glas enthält, aus der Siebmaschine einem Metallabscheider zugeführt wird, in dem noch vorhandene Metallteile ausgeschieden werden.

6. Verfahren nach einem der Ansprüche 1 bis 4, dadurch gekennzeichnet, daß zumindest die hauptsächlich Glas enthaltende Fraktion aus der Siebmaschine oder aus dem Metallabscheider mit einem Vibrator in ein Transportgefäß gebracht wird.

7. Verfahren nach Anspruch 6, dadurch gekennzeichnet, daß in dem Vibrator die Bestandteile unter Luftabschluß zur Reduzierung der noch enthaltenen Quecksilbermenge eine kurze Zeit aufgeheizt werden.

8. Verfahren nach Anspurch 7, dadurch gekennzeichnet, daß die Bestandteile 1 bis 3 min lang auf 200° bis 500° aufgeheizt werden.

9. Vorrichtung zur Durchführung des Verfahrens nach einem der Ansprüche 1 bis 8, gekennzeichnet durch eine Zerkleinerungsvorrichtung, die mit einer Siebmaschine in Verbindung steht, mit der drei Fraktionen abscheidbar sind.

10. Vorrichtung nach Anspruch 9, dadurch gekennzeichnet, daß ein Ofen vorgesehen ist, dem die Bestandteile kleinster Größe zuführbar sind.

11. Vorrichtung nach Anspruch 9 oder 10, dadurch gekennzeichnet, daß der Siebmaschine ein Metallabscheider und/oder ein Vibrator nachgeschaltet sind/ist.

12. Vorrichtung nach Anspruch 11, dadurch gekennzeichnet, daß der Vibrator Heizelemente aufweist.

13. Vorrichtung nach einem der Ansprüche 10 bis 12, dadurch gekennzeichnet, daß die Transportwege zwischen Zerkleinerungsvorrichtung und Siebmaschine und gegebenenfalls zwischen Siebmaschine und Ofen unter Unterdruck stehen.

Einwurf schacht

Shredder

Abluft

Siebmaschine

Fraktion 1

Fraktion.2

Fraktion 3

Gebläse

Filter

Ofen

Kondensator

Hg

Reststoff

Europäisches
Patentamt

EUROPÄISCHER RECHERCHENBERICHT

Nummer der Anmeldung

EP 90250244.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | DE - A1 - 3 618 434 (HERBORN P.) * Ansprüche 1-3 * -- | 1,3,9 | B 09 B 3/00 B 09 B 5/00 H 01 J 9/50 B 07 B 4/08 |
| A | EP - A2 - 0 298 035 (RECYTEC S.A.) * Anspruch 1 * -- | 1 | |
| D,A | EP - A1 - 0 157 249 (PATENT-TREUHAND-GESELLSCHAFT FÜR ELEKTRISCHE GLÜHLAMPEN) * Anspruch 1 * ---- | 1 | |

RECHERCHIERTE SACHGEBIETE (Int Cl⁵)

B 09 B 3/00
B 09 B 5/00
H 01 J 9/00
B 07 B 4/00

Der vorliegende Recherchenbericht wurde für alle Patentansprüche erstellt

| Recherchenort | Abschlußdatum der Recherche | Prüfer |
|---|---|---|
| WIEN | 27-11-1990 | BRUS |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82